Europäisches Patentamt

European Patent Office

Office européen des brevets

(19)

(11) Numéro de publication: **0 273 794 B1**

## FASCICULE DE BREVET EUROPEEN

(12)

(45) Date de publication de fascicule du brevet: **19.08.92**  (51) Int. Cl.5: **C08G 14/06**, C09J 161/34

(21) Numéro de dépôt: **87402682.6**

(22) Date de dépôt: **26.11.87**

(54) **Procédé de fabrication de liants aminoplastes.**

(30) Priorité: **11.12.86 FR 8617328**

(43) Date de publication de la demande:
**06.07.88 Bulletin 88/27**

(45) Mention de la délivrance du brevet:
**19.08.92 Bulletin 92/34**

(84) Etats contractants désignés:
**AT BE CH DE ES GB GR IT LI LU NL SE**

(56) Documents cités:
EP-A- 0 069 267
EP-A- 0 152 318
EP-A- 0 190 068
FR-A- 2 172 841
FR-A- 2 576 026

WPI, FILE SUPPLIER, 1987, no.
AN = 76-02655X, Derwent Publications Ltd,
Londres, GB

WPI, FILE SUPPLIER, 1987, no.
AN = 76-02653X, Derwent Publications Ltd,
Londres, GB

(73) Titulaire: **ELF ATOCHEM S.A.**
**4 & 8, Cours Michelet La Défense 10**
**F-92800 Puteaux(FR)**

(72) Inventeur: **Boucheron, Bernard**
**1, rue des Vergers**
**F-57110 Yutz(FR)**
Inventeur: **Greff, Marcel**
**Zerwasstrasse 3**
**W-6643 Perl-Tettingern(DE)**

(74) Mandataire: **Rieux, Michel et al**
**ATOCHEM Département Propriété Industriel-**
**le 4, Cours Michelet - La Défense 10 - Cedex**
**42**
**F-92091 Paris-La Défense(FR)**

Rank Xerox (UK) Business Services

## Description

La présente invention concerne un procédé de fabrication de liants aminoplastes. Elle a plus particulièrement pour objet un procédé de fabrication de liants aminoplastes convenant particulièrement dans le collage du bois puisque leur mise en oeuvre produit des émanations réduites de formol et de phénol et conduit à des collages résistants à l'eau et aux intempéries.

La majorité des colles utilisées dans l'industrie du bois sont à base de résine urée-formol qui sont connues comme peu résistantes à l'humidité. Les résines phénoliques, si elles conviennent pour la réalisation de collages résistants aux intempéries, fournissent des collages colorés et produisent des dégâts dans le bois au moment du pressage. Par ailleurs, ces résines sont connues pour être peu réactives, ce qui ne permet d'obtenir que de faibles cadences de fabrication lors de leur utilisation dans l'industrie du bois. De plus, l'utilisation optimale de ces résines phénoliques nécessite d'augmenter leur alcalinité, par l'addition de durcisseurs eux-même alcalins : une telle alcalinité provoque des efflorescences à la surface des matériaux fabriqués.

Afin d'obtenir des résines qui permettent d'obtenir des collages présentant en particulier une bonne résistance à l'humidité et aux intempéries, on a proposé des recettes particulières de fabrication de résines qui contiennent de l'urée, de la mélamine, du formol et du phénol. A cet effet, on a proposé de condenser la mélamine et/ou l'urée avec du formol en solution aqueuse puis de faire réagir le condensat obtenu avec du phénol avec, le cas échéant, de la mélamine et du formol, cette dernière condensation étant réalisée à pH compris entre 7,5 et 10 (voir brevet français 2 092 232). Les résines obtenues en mettant en oeuvre un tel procédé, permettent d'obtenir des collages acceptables en ce qui concerne la résistance aux intempéries mais contiennent encore des quantités trop élevées de formol libre et de phénol libre.

Afin de réduire encore un peu plus les quantités de formol libres et de phénol libre, on a proposé un procédé en deux ou trois étapes selon lequel on condense dans une première étape tout le phénol avec un précondensat d'urée et de formol en présence d'urée, la condensation étant réalisée à pH au plus égal à 5,5, dans une deuxième étape conduite à pH au plus égal à 8, on ajoute la mélamine et le cas échéant une nouvelle quantité d'urée , de l'urée étant ajoutée éventuellement dans une troisième étape (voir brevet français 2 558 839).

Tous ces procédés ne sont pas encore totalement satisfaisants, car ils conduisent encore à des résines qui contiennent des quantités relativement élevées de phénol libre. Par ailleurs,les procédés connus jusqu'alors conduisent à des résines qui ne permettent pas de fabriquer des panneaux de bois présentant des taux de formol libre réduits.Le besoin se fait donc sentir de mettre au point des résines présentant des teneurs réduites en formol. La présente invention concerne un procédé de fabrication de liants aminoplastes comprenant de l'urée, de la mélamine, du formol et du phénol qui conduit à des produits qui présentent très peu d'émanations de produits libres nocifs.

La présente invention concerne un procédé de fabrication de liants aminoplastes contenant pour une mode d'urée, 0,2 à 0,8 moles de mélamine, 1,5 à 5 moles de formaldéhyde, 0,05 à 0,5 mole de phénol selon lequel on condense dans une première étape à pH neutre, puis à pH acide, un précondensat d'urée et de formaldéhyde de rapport molaire F/U compris entre 3 et 6 ou une solution aqueuse de formaldéhyde de concentration comprise entre 30 et 75 % en poids en présence d'urée, de manière que le rapport molaire F/U soit compris à cette première étape entre 1,8 et 3, on ajoute ensuite dans une deuxième étape le phénol et la mélamine, caractérisé en ce que le phénol est apporté dans la seconde étape sous forme d'un précondensat formo-phénolique condensé en milieu alcalin à partir de formol et de phénol utilisés dans un rapport molaire F/P compris entre 1,5 et 3,5, contenant au plus 6 % de soude caustique par rapport au poids de la solution de précondensat et constitué d'au moins 30 % en poids de matières actives définies par la somme de quantités de phénol, de formol et de soude caustique utilisées comme produits de départ, du formol en quantité au plus égale à 8 % en poids par rapport au poids de la résine finie étant éventuellement ajouté lors de cette étape, cette seconde étape étant conduite à pH basique au moins égal à 8, et en ce que dans une troisième étape on ajoute éventuellement le restant de l'urée après refroidissement à température comprise entre 40 et 80°C, la mélamine étant ajoutée avant, après ou avec le précondensat formophénolique.

On a trouvé qu'en opérant dans ces conditions, on obtient des résines qui présentent de bonnes caractéristiques, ainsi qu'une teneur réduite en phénol libre. La mise en oeuvre d'un tel procédé conduit à des résines permettant de fabriquer des panneaux finis présentant des taux de formol libre réduits alliés à de bonnes caractéristiques mécaniques.

Le procédé de la présente demande consiste dans un procédé de fabrication de résines aminoplastes contenant de l'urée, de la mélamine, du formol et du phénol, à apporter le phénol sous forme d'un précondensat formo-phénolique. Ce précondensat formo-phénolique présente un rapport molaire F/P compris entre 1,5 et 3,5 il contient au plus 6 % en poids de soude par rapport au poids de la solution de précondensat, et de préférence une quantité comprise entre 1 et 3%, ce précondensat étant constitué d'au moins 30 % en poids de matières actives et de préférence de 40 à 60 % de matières actives définies par la somme des quantités de phénol, de formol et de soude caustique utilisés comme produits de départ. De façon connue, le précondensat formo-phénolique utilisé pour la mise en oeuvre du procédé de l'invention est préparé en condensant en milieu basique du phénol et du formol dans des rapports molaire F/P compris entre 1,5 et 3,5. Selon l'invention, on ajoute ensuite éventuellement du formol en quantité au plus égale à 8 % en poids par rapport au poids de la résine finie, la mélamine étant ajoutée avant après ou avec le précondensat formo-phénolique.

Selon l'invention, le précondensat formo-phénolique, la mélamine et éventuellement du formol sont ajoutés dans la seconde étape du procédé, au produit de condensation obtenu dans la première étape du procédé. Cette seconde étape est conduite à pH basique au moins égal à 8. Cette étape est réalisée à une température comprise entre 40 et 100°C. Après refroidissement, de façon connue, on ajoute éventuellement de l'urée.

Le procédé de la preésente demande consiste à condenser de façon connue d'abord à pH neutre puis à pH acide, un précondensat d'urée et de formol de rapport molaire F/U compris entre 3 et 6 et de préférence entre 4 et 5, ou une solution aqueuse de formaldéhyde de concentration comprise entre 30 et 75 % et de préférence entre 40 et 60 %, avec de l'urée de manière que le rapport molaire F/U soit compris entre 1,8 et 3, et de préférence supérieur à 2. Les précondensats d'urée et de formaldéhyde sont des produits connus préparés par réaction d'urée et de formol de rapport molaire compris entre 3 et 6. Comme précondensats, on peut citer par exemple des produits vendus sous la marque "SARUFORM 80" par la Société CdF CHIMIE. Cette condensation est conduite d'abord à pH neutre, puis à pH acide au plus égal à 5,5 : l'acidification est obtenue par addition par exemple d'une solution diluée d'acide formique.

Les résines obtenues selon le procédé de l'invention peuvent être mises en oeuvre en ajoutant des modificateurs connus, tels que des produits hydrofugeants ou fongicides. Les résines préparées selon le procédé de l'invention sont durcies en mettant en oeuvre des techniques usuelles de collages et d'agglomérations du bois, c'est-à-dire par effet catalytique de catalyseurs connus : chlorure ou sulfate d'ammonium en faisant réagir en même temps à la chaleur. La réactivité des résines est déterminée selon une méthode dite du tube à essais, qui consiste à peser 6 g d'un mélange constitué du liant additionné de 5 % par rapport à ce liant d'une solution aqueuse de chlorure d'ammonium à 15 %, à placer ce tube dans un bain d'eau bouillante tout en agitant le mélange et à mesurer le temps écoulé jusqu'à gélification du mélange.

Les exemples suivants illustrent la présente invention. Les quantités sont exprimées en partie en poids.

**EXEMPLE 1 : PREPARATION DU PRECONDENSAT FORMO-PHENOLIOUE**

Dans un réacteur agité, on introduit:
- 639 parties de phénol,
- 1 342 parties de formol à 40 %,
- 320 parties d'eau,
- 99 parties de soude à 50 %.

On porte la température à 60°C, puis on arrête le chauffage, la température monte alors lentement jusqu'à 70°C. On refroidit le mélange réactionnel de façon que la température se maintienne à 60-65°C pendant 3 heures environ. On laisse ensuite le mélange refroidir pendant 12 heures.

On obtient alors une résine de caractéristiques suivantes :

```
- viscosité ......................... 110      mPa.s

- extrait sec ...................... 44,2   %

- formaldéhyde libre ............. 2,3    %

- phénol libre .................... 0,6    %

- F/P ............................. 2,6    %

- soude ........................... 2,1    %
```

Le précondensat obtenu est très stable puisque 2 mois aprés sa fabrication, sa viscosité n'est que de 240 mPa.s.

Préparation d'une résine MUPF à partir du précondensat formo-phénolique fabriqué ci-dessus

Dans un réacteur agité, on introduit :
- 876 parties d'un précondensat urée-formaldéhyde vendu sous la marque SARUFORM 80 par CdF CHIMIE. Sa composition est la suivante :

```
- formaldéhyde ......... 57 %

- urée ................. 23 %

- eau .................. 20 %
```

- 271 parties d'urée technique,
- 146 parties d'eau.

Le mélange est porté à une température de 100°C et le pH à une valeur de 6,4 par addition de 0,25 partie de soude à 24 %. On maintient le mélange réactionnel à cette température pendant 15 minutes.

On acidifie ensuite par addition de 1,9 partie d'acide formique à 18 %, le pH est alors 5,1. On condense alors pendant 15 minutes jusqu'à ce que le temps d'écoulement dans une coupe de 6 mm atteigne au moins 30 secondes à 40°C. Cette coupe est réalisée selon la norme DIN 53211 en remplaçant toutefois la buse normale de 4 mm de diamètre par une buse de même longueur et de diamètre 6 mm.

On ajoute ensuite :
- 329 parties de condensat formo-phénolique froid,
- 244 parties d'eau,
- 550 parties de mélamine,

ce qui provoque une chute de température à 73°C. On remonte la température à 90-92°C et on condense à pH 9,4 pendant 30 minutes jusqu'à ce que le temps d'écoulement en coupe de 6 mm atteigne 15 secondes. On refroidit alors à 55°C en 30 minutes et ajoute 85 parties d'urée technique.

On obtient alors une résine présentant les caractéristiques suivants :

```
- extrait sec ..................... 62,4 %

- masse volumique ................. 1 280 kg/m3

- pH ............................... 9,5

- viscosité ....................... 320 mPa.s.

- formaldéhyde libre .............. 0,4 %

- temps de gel à 100°C ............ 125 secondes

- phénol libre .................... 0,03 %
```

Le tableau annexé indique les résultats des caractéristiques des panneaux obtenus en mettant en oeuvre la résine obtenue dans cet exemple.

## EXAMPLE 2 :

Dans un réacteur agité, on introduit :
- 791 parties d'un précondensat urée-formaldéhyde qui présente la composition de celui de l'exemple 1,
- 243 parties d'urée technique,
- 130 parties d'eau.

Le mélange est chauffé à 100°C et le pH est porté à une valeur de 6,5 par addition de 0,4 parties de soude à 24 %. On maintient cette température pendant 15 minutes.

On acidifie ensuite le milieu réactionnel par addition de 1,4 partie d'acide formique à 18 %, le pH est alors de 5,1. On condense alors pendant 20 minutes jusqu'à ce que le temps d'écoulement dans une coupe de 6 mm atteigne 20 secondes à 40°C (déterminée selon la même norme que dans l'exemple 1).

On ajoute alors :
- 329 parties du précondensat formo-phénolique préparé comme dans l'exemple 1,
- 125 parties de formol à 40 %,
- 206 parties d'eau,
- 550 parties de mélamine,

ce qui provoque une chute de température à 70°C environ. On chauffe le mélange de façon à ce que la température soit de 90-92°C pendant 25 minutes. Le pH est maintenu à 9,0-9,2 par addition de 1,3 parties de soude à 24 %. Le produit atteint un temps d'écoulement de 14 secondes à 20°C. On abaisse la température à 60°C en 50 minutes (le temps d'écoulement s'élève alors à 16 secondes à 20°C). On ajoute alors 126 parties d'urée technique, la température chute à 50°C.

On obtient alors un produit présentant les caractéristiques suivantes :

```
- extrait sec .............   62,5%
- pH ......................    9,6
- temps d'écoulement ......   16 secondes à 20°C.
```

## EXEMPLE 3

Dans un réacteur agité on charge :
- 880 parties du précondensat urée-formaldéhyde de l'exemple précédent,
- 229 parties d'urée technique,
- 219 parties d'eau.

Les phases neutres et acides de cuisson se déroulent comme dans l'exemple précédent, avec la différence qu'on arrête la cuisson acide qui dure 50 minutes pour un temps d'écoulement de 17 secondes à 40°C.

On remonte ensuite le pH à 7,0 par addition de 0,9 partie de soude à 24% et on ajoute :
- 329 parties de condensat formo-phénolique de l'exemple 1,
- 130 parties d'eau.
- 550 parties de mélamine.

La condensation est poursuivie à une température de 90-95°C pendant 45 minutes jusqu'à ce que le temps d'écoulement atteigne 30 secondes à 20°C : le pH étant maintenu à 9-9,2 par addition de 1,9 parties de soude. On refroidit alors à 60°C en 30 minutes et on ajoute 163 parties d'urée technique.

On obtient un produit de caractéristiques suivantes :

```
- extrait sec .............   62,5 %
- pH ......................    9,4
- temps d'écoulement ......   24 secondes à 20°C.
```

## EXEMPLE 4

L'exemple 1 est répété en opérant de la façon suivante : on met en oeuvre un précondensat formo-phénolique à partir de :
- 6 695 parties de phénol,
- 9 614 parties de formol à 40 %,
- 944 parties de soude à 50 %,
- 5 697 parties d'eau.

On maintient le mélange réactionnel à 60-65°C. On obtient alors une résine de caractéristiques suivantes :

```
- viscosité ...............   100 mPa.s

- extrait sec ............   41,0 %

- formaldéhyde libre ......    0,2 %

- phénol libre ...........    0,7 %

- soude ..................    2,2 %

- F/P ....................    1,8
```

On prépare une résine MUPF à partir du précondensat formo-phénolique précédent. On met en oeuvre :

- 3 363 parties de formurée (de composition suivante : formaldéhyde 56 % urée 23 %, eau 21 %),
- 1 036 parties d'urée technique,
- 1 087 parties d'eau.

A 100°C on ajuste le pH en ajoutant 1,5 parties de soude à 24 %, puis après 15 minutes on acidifie en ajoutant 5,4 parties d'acide formique à 18%. On condense alors pendant 35 minutes afin quel le temps d'écoulement dans une coupe de 6 mm atteigne 24 secondes à 40°C.

On remonte alors le pH à 8,0-8,5 par addition de 7,6 parties de soude à 24% ; on ajoute ensuite :

- 517 parties de formol à 43 %,
- 83 parties d'eau,
- 2 060 parties de mélamine,

et on remonte la température à 90-95°C et le pH à 9,7 par addition de 5,1 parties de soude à 24 %.

Quand la mélamine est dissoute, on ajoute 1 305 parties du précondensat formo-phénolique précédent et on condense à 90°C pendant 25 minutes. Le temps d'écoulement en coupe de 6mm s'élève alors à 22 secondes à 20°C.

On refroidit ensuite à 50°C et on ajoute 550 parties d'urée technique.

On obtient alors une résine qui présente les caractéristiques suivantes :

```
- extrait sec .............   63,0 %

- mase volumique .........   1 281 kg/m3

- pH ....................    9,0

- viscosité ..............   510 mPa.s

- formaldéhyde libre ......    0,9 %

- temps de gel à 100°C ....   140 secondes

- phénol libre ...........    0,1 %
```

Les caractéristiques des panneaux obtenus en mettant en oeuvre la résine obtenue dans cet exemple sont résumées dans le tableau annexé.

**EXEMPLE 5**

L'exemple 1 est répété en mettant en oeuvre les conditions suivantes : on met prépare un précondensat à partir de:

- 565 parties de phénol,
- 1 441 parties de formol à 40°C,
- 91 parties de soude à 50%,
- 202 parties d'eau.

Après 5 heures de chauffage à 60-65°C, on obtient une résine qui présente les caractéristiques suivantes :

```
- extrait sec .............   43,8 %

- formaldéhyde libre ......    5,5 %

- phénol libre ...........    0,1 %

- soude ..................    2,0 %

- F/P ....................    3,2
```

On prépare une résine MUPF à partir du précondensat formo-phénolique précédent. On met en oeuvre :

- 2 094 parties de formurée de composition identique à celle de l'exemple 4,
- 459 parties d'urée technique,
- 276 parties d'eau.

A 100°C on ajuste le pH par addition de 0,8 partie de soude à 24 %, puis après 15 minutes on acidifie par addition de 1,9 parties d'acide formique à 18 %. On condense ensuite pendant 40 minutes jusqu'à ce que le temps d'écoulement dans une coupe de 6mm atteigne 11 secondes à 40°C.

On remonte alors le pH à 8,7 par addition de 5,1 parties de soude à 24 % et on ajoute 1 010 parties de mélamine et 326 parties d'eau. On maintient alors la température à 90°C et on ajuste le pH à 9,0-9,2 par addition de 3,8 parties de soude à 24 %.

Quand le mélamine est dissoute, on ajoute 835 parties de précondensat formo-phénolique préparé ci-dessus et on condense à 90°C pendant 30 minutes. Le temps d'écoulement atteint alors 20 secondes à 20°C.

On refroidit et on obtient une résine qui présente les caractéristiques suivantes :

```
- extrait sec ............   63,9 %

- masse volumique ........   1 285 kg/m3

- pH .....................   9,0

- viscosité ..............   390 mPa.s

- formaldéhyde libre .....   1,2 %

- phénol libre ..........    0,1 %

- temps de gel à 100°C ...   128 secondes
```

Les caractéristiques des panneaux obtenus en mettant en oeuvre la résine obtenue dans cet exemple sont résumées dans le tableau annexé.

7

## TABLEAU

| Résine utilisée | Résine de l'exemple 1 | Résine de l'exemple 4 | Résine de l'exemple 5 |
|---|---|---|---|
| Temps de gel des mélanges collants (secondes) | | | |
| – couche extérieure | 180-210 | 190-206 | 180-192 |
| – couche intérieure | 113 | 118 | 84 |
| Epaisseur (mm) | 19,76 | 19,88 | 19,65 |
| Masse volumique (kg/m3) | 666 | 678 | 690 |
| Gonflements (DIN) (%) | | | |
| – 2 heures | 5,6 | 5,1 | 5,1 |
| – 24 heures | 11 | 10,4 | 9,7 |
| Traction transversale (MPa.) V 100 | 0,213 | 0,23 | 0,30 |
| Humidité sec (%) | 7,6 | 9,6 | 10 |
| Perforateur (norme EN 120) Teneur en formol (mg/100g) | 6,7 | 9,5 | 29,8 |

## Revendications

1. Procéde de fabrication de liants aminoplastes contenant pour une mole d'urée, 0,2 à 0,8 mole de mélamine, 1,5 à 5 moles de formaldéhyde, 0,05 à 0,5 mole de phénol selon lequel on condense dans une première étape à pH neutre, puis à pH acide, un précondensat d'urée et de formaldéhyde de rapport molaire F/U compris entre 3 et 6 ou une solution aqueuse de formaldéhyde de concentration comprise entre 30 % et 75% en poids en présence d'urée, de manière que le rapport molaire F/U soit compris à cette première étape entre 1,8 et 3, on ajoute ensuite dans une deuxième étape le phénol et la mélamine, caractérisé en ce que le phénol est apporté dans la seconde étape sous forme d'un précondensat formo-phénolique condensé en milieu alcalin à partir de formol et de phénol utilisés dans un rapport molaire F/P compris entre 1,5 et 3,5 contenant au plus 6 % de soude caustique par rapport au poids de la solution de précondensat et constitué d'au moins 30 % en poids de matières actives définies par la somme des quantités de phénol, de formol et de soude caustique utilisées comme produits de départ, du formol en quantité au plus égale à 8 % en poids par rapport au poids de la résine finie étant éventuellement ajouté lors de cette étape, cette seconde étape étant conduite à pH basique au moins égal à 8, et en ce que dans une troisième étape on ajoute éventuellement le restant de l'urée après refroidissement à température comprise entre 40 et 80°C, la mélamine étant ajoutée avant, après ou avec le précondensat formo-phénolique.

**2.** Procédé selon la revendication 1, caractérisé en ce que le précondensat formo-phénolique contient de 40 à 60% en poids de matières actives.

## Claims

**1.** Process for the manufacture of aminoplastic binders containing, per one mole of urea, 0.2 to 8.0 moles of melamine, 1.5 to 5 moles of formaldehyde and 0.05 to 0.5 moles of phenol, according to which, in a first stage, a precondensate of urea and of formaldehyde with an F/U molar ratio of between 3 and 6 or an aqueous solution of formaldehyde at a concentration between 30% and 75% by weight is condensed at neutral pH and then at acidic pH, in the presence of urea, so that the F/U molar ratio is between 1.8 and 3 in this first stage, phenol and melamine are then added in a second stage, characterised in that the phenol is introduced in the second stage in the form of a phenol-formalin precondensate condensed in alkaline medium from formalin and phenol which are employed in an F/P molar ratio of between 1.5 and 3.5 containing not more than 6% of caustic soda relative to the weight of the precondensate solution and consisting of at least 30% by weight of active matter defined as the sum of the quantities of phenol, formalin and caustic soda employed as starting materials, formalin in a quantity not exceeding 8% by weight relative to the weight of the finished resin being optionally added during this stage, this second stage being conducted at basic pH of at least 8, and in that, in a third stage, the remainder of the urea is optionally added after cooling to a temperature of between 40 and 80°C, the melamine being added before, after or with the phenol-formalin precondensate.

**2.** Process according to Claim 1, characterised in that the phenol-formalin precondensate contains from 40 to 60% by weight of active matter.

## Patentansprüche

**1.** Verfahren zur Herstellung von Aminoplastbindemitteln enthaltend auf ein Mol Harnstoff 0,2 bis 0,8 Mol Melamin, 1,5 bis 5 Mol Formaldehyd und 0,05 bis 0,5 Mol Phenol, bei welchem man in einem ersten Schritt bei neutralem pH-Wert und dann bei saurem pH-Wert kondensiert ein Vorkondensat von Harnstoff (U) und Formaldehyd (F) mit einem Molverhältnis F/U zwischen 3 und 6 oder eine wäßrige Formaldehydlösung einer Konzentration zwischen 30 und 75 Gew.-% in Gegenwart von Harnstoff, derart, daß in diesem ersten Schritt das Molverhältnis F/U zwischen 1,8 und 3 liegt, und anschließend in einem zweiten Schritt das Phenol und das Melamin zugibt, dadurch gekennzeichnet, daß das Phenol in dem zweiten Schritt in Form eines in alkalischem Milieu aus Formol (F) und Phenol (P) in einem Molverhältnis F/P zwischen 1,5 und 3,5 kondensierten Formol-Phenol-Vorkondensats zugegeben wird, das höchstens 6 Gew.-% Ätznatron, bezogen auf das Gewicht der Vorkondensatlösung, enthält und zu mindestens 30 Gew.-% aus aktiven Stoffen, die durch die Summe der als Ausgangsprodukte verwendeten Phenol, -Formol- und Ätznatronmengen bestimmt werden, besteht, wobei gegebenenfalls während dieses Schrittes Formol in einer Menge von höchstens 8 Gew.-%, bezogen auf das Gewicht des fertigen Harzes, zugesetzt wird, und wobei dieser zweite Schritt bei einem basischen pH-Wert von mindestens 8 ausgeführt wird, und daß man in einem dritten Schritt gegebenenfalls den Rest an Harnstoff nach Abkühlung auf eine Temperatur zwischen 40° und 80°C zusetzt, wobei das Melamin vor, nach oder mit dem Formol-Phenol-Vorkondensat zugesetzt wird.

**2.** Verfahren nach Anspruch 1, dadurch gekennzeichnet, daß das Formol-Phenol-Vorkondensat 40 bis 60 Gew.-% aktive Stoffe enthält.